# EUROPEAN PATENT SPECIFICATION

(11) **EP 0 886 575 B1**
(45) Date of publication and mention of the grant of the patent: **09.08.2000**
(21) Application number: 97902259.7
(22) Date of filing: 29.01.1997
(51) Int. Cl.: B32B 27/12, B32B 31/12, B29C 51/14

(54) **PLATE, PANEL OR SIMILAR, OF THERMOFORMABLE MULTILAYER MATERIAL AND METHOD FOR ITS FABRICATION**
PLATTE, PANEEL ODER ÄHNLICHE ARTIKEL AUS THERMOFORMBAREM MEHRSICHTIGEM MATERIAL UND VERFAHREN ZUR HERSTELLUNG DERSELBEN
PLAQUE, PANNEAU OU ELEMENT ANALOGUE CONSTITUE D'UN MATERIAU MULTICOUCHE DEFORMABLE ET SON PROCEDE DE FABRICATION

(30) Priority: 01.02.1996 IT SV960005
(43) Date of publication of application: 30.12.1998
(73) Proprietor: G.O.R. Applicazioni Speciali S.p.A., 10060 Buriasco, Torino (IT)
(72) Inventor: VENERE, Giorgio, I-12025 Dronero (IT); ODINO, Adriano, I-10060 Angrogna (IT)
(74) Representative: Karaghiosoff, Giorgio Alessandro, Dott.
(86) International application number: EP9700396
(87) International publication number: WO9727998

(56) References cited:
- EP-A- 0 419 439
- BE-A- 791 271
- DE-A- 2 704 529
- GB-A- 2 206 079
- US-A- 3 775 236
- US-A- 4 119 749
- PATENT ABSTRACTS OF JAPAN vol. 018, no. 679 (M-1728), 21 December 1994 & JP 06 270362 A (IKEDA BUSSAN CO LTD), 27 September 1994,
- PATENT ABSTRACTS OF JAPAN vol. 016, no. 145 (M-1233), 10 April 1992 & JP 04 004138 A (HOWA KASEI:KK), 8 January 1992,

## Description

It is an object of the invention to provide a plate, a panel, or similar, of a multilayer, thermoformable material of the type described hereinbefore, in such a way that it can have a good stiffness and solidity, with no excessive increase of the specific weight, without compromising the thermoformability of the panel, and with no considerable cost increase for the material and the fabrication.

Particularly, the invention aims at providing plates, panels, or similar of a thermoformable material, with supporting layers made of foamed plastic, with such properties of stiffness, weight and cost as to allow for use in the fabrication of lining panels, and especially vehicle lining panels, or similar, such as the so-called hatracks, the lining of the body sides, of the doors, and particularly the headlining, etc.

The invention achieves the above stated purposes by providing a plate, panel or similar of thermoformable multilayer material, comprising one supporting layer (1) made of foamed plastic and coated on both faces by a crepe paper sheet (2) bonded to the supporting layer (1), and which is characterized in that
a) on at least one of the crepe paper sheets (2) is bonded an outer coating layer (6),
b) each crepe paper sheet (2) is previously provided on its inner coupling face contacting the supporting layer (1) with a thermoplastic adhesive film (3),
c) the inner coupling face of the outer coating layer (6) and/or the outer coupling face of the respective crepe paper sheet (2) are previously provided with a thermoplastic adhesive film (3),
d) the crepe paper sheets (2), the interposed supporting layer (1) and the outer coating layer (6) are heat sealed together.

The fixing of the crepe paper layers is done with a thermoplastic adhesive film.

One of the crepe paper sheets may form an outer layer on the supporting layer. At least one of the crepe paper sheets forms an intermediate layer between a different outer coating layer and the supporting layer.

The said outer coating layer, too, is fixed to the crepe paper layer with a thermoplastic adhesive film.

The type of the thermoplastic adhesive films depends on the typology of the foamed plastic used for the supporting layer and on the typology of materials and structure of the eventual coating layer.

As outer coating layers, there may be used textiles, felts, not woven textiles, mat, or similar, of natural fibers, synthetic fibers or combinations of the said fibers, or even plastic films, sheets, or similar, sheets of natural or synthetic leather, or other types of coatings.

The supporting layer is coated on both faces by a crepe paper sheet.

In a preferred embodiment, the crepe paper layers are fixed to the supporting layer by means of thermoplastic materials, which have been previously spread, while in the heated condition at the melted or anyway pasty/plastic state, on the face of the crepe paper, which is meant to adhere against the supporting layer.

The crepe paper sheet so prepared is fixed to the supporting layer made of foamed material through heating of the side on which the layer of resin or thermoplastic material is spread, and through its compression on the supporting layer.

Thanks to the expedients disclosed above, the material according to the invention allows to achieve in a simple and cheap manner the forming and stiffness properties, suitable for the use of the latter in the fabrication of lining panels, or similar. During thermoforming, the crepe paper sheet complies to the deformations transmitted to the panel, without tearing. Furthermore, the use of crepe paper allows to limit the specific weight of the material and to increase the percentage of recyclable and/or degradable material, reducing its environmental impact.

The invention also provides other characteristics which form the subject of the dependent claims.

The characteristics of the invention and the advantages derived therefrom will appear more clearly from the following description of some non-limiting embodiments, illustrated in the annexed drawings, in which:

Fig. 1 shows a cross section through a plate, panel or similar, which has only one crepe paper coated face and for which, therefore, no protection is sought, which, however, is useful for understanding the claimed invention.

Fig. 2 shows an embodiment of the claimed invention.

Fig. 3 schematically shows an example of fabrication of a plate or panel according to the invention.

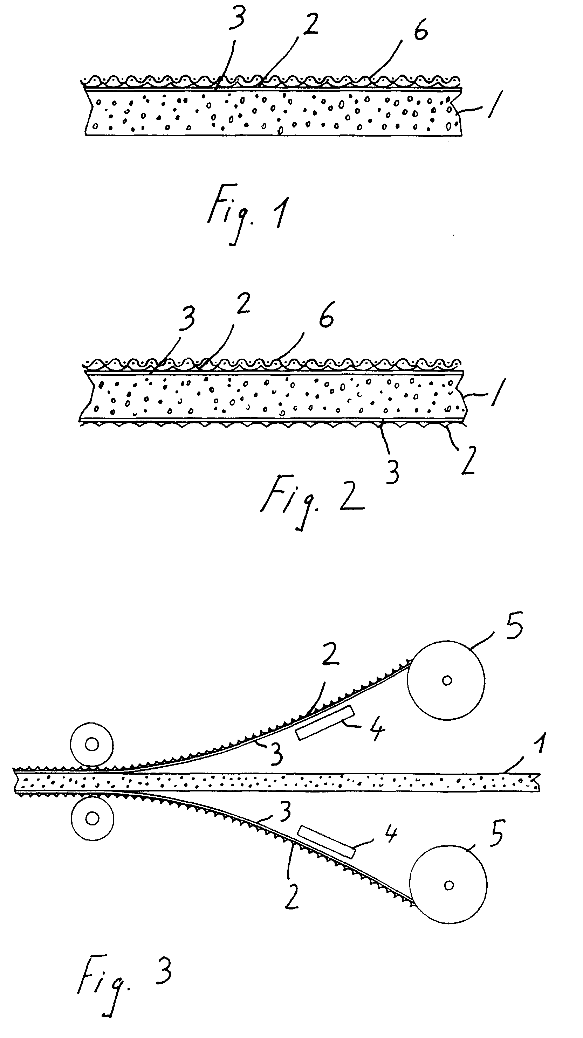

Referring to fig. 1 and 2, a multilayer thermoformable material is made of a supporting layer of foamed plastic, preferably polypropylene or foamed polyethylene, referred to with 1. The said supporting layer 1 may be of several thicknesses, according to the final use of the part made therewith, and the thickness may vary from 1 to some mm, preferably from 1 to about 10 mm, especially from 3 to 5 mm. The density of the supporting layer 1 may also vary according to the final use and preferably in a range from 5 to 150 Kp/m³.

The supporting layer 1 is coated on one or both faces by at least one additional layer 2, made of crepe paper.

The application of this material on one or both faces of the supporting layer 1 allows for a good stiffness of the part, keeping the specific weight reduced with respect to prior art materials.

The crepe paper sheet 2 has good properties of stretching on molding of the material, thus preventing from tearing in case of very marked deformations. Crepe paper is a natural and biodegradable component of the material, and reduces the environmental impact of the latter.

The sheet 2 made of crepe paper may be applied on the supporting layer 1 of foamed material in several ways.

According to a first embodiment, it is possible to make use of thermoplastic films, referred to with 3 in figs. 1 and 2. Alternatively to what described above, it is possible to use thermoplastic materials, which are spread at the melted state on the side for adhesion with the sheet 2 made of crepe paper or of other coating material, and which are referred to with 3' in fig. 3. The said thermoplastic materials spread on the layer 2 are obviously to be compatible with the material which forms the supporting layer 1.

Particularly, with a supporting layer made of foamed polypropylene, advantages are drawn from the use of polypropylene as adhesive thermoplastic material 3', spread over the coupling side of the sheet 2 of crepe paper, or as thermoplastic film 3 for mutual adhesion of the two layers 2 and 1.

A possible method for coupling the crepe paper sheets to the supporting layer 1 is schematically shown in fig. 3. The face of the crepe paper sheets 2 which is in front of the supporting layer 1 and on which a layer 3' of resin or thermoplastic material has been previously spread, are heated by heating means 4 so as to reach a state of softening or substantial melting. Further, the said crepe paper sheets 2 are pressed against the supporting layer made of foamed material 1, fixing to it thanks to the layer 3' made of heated thermoplastic material.

The crepe paper sheets 2, with one side spread of thermoplastic material 3', are reelable in reels 5, and the method for coupling to the supporting layer 1 may be executed in a continuous operation.

Referring to figs. 1 and 2, the crepe paper sheet 2 may directly be the outer coating layer of the supporting layer 1 or may be an intermediate layer between the supporting layer 1 and an outer coating layer 6. This outer coating layer 6, though shown in the form of textile in figs. 1 and 2, may be of any type, and be made of natural or synthetic material, particularly it may be a woven textile, a not woven textile, a mat, a felt, or similar made of natural fibers, of synthetic fibers or of a mixture of said fibers.

Alternatively, the coating layer 6 may be made of a layer of natural leather or synthetic leather.

On one or both sides of the supporting layer 1 made of foamed material, there may be applied, in the form of outer coating or intermediate layer, even more overlapping layers, each made of a wrinkled or creped sheet, particularly at least one of these layers being made of a crepe paper sheet.

The considerable stretching which may be imposed to crepe paper, allows for its application both in a processing phase taking place previously and separately with respect to the molding phase of the multilayer material, like, for example, according to the method of fig. 3, and during the molding phase itself, of the material eventually together with the possible additional outer coating sheet or sheets 6.

There may be also assumed a previous coupling between the crepe paper sheet or sheets and the outer overlapping coating layer 6, before fixing both said layers 2, 6 with the supporting layer, both according to a method analogous to that of fig. 3 and during the thermoforming itself of the material.

Moreover, there may be also provided that the crepe paper sheet or sheets 2 and the coating layer or layers be fixed to each other and, at the same time, to the supporting layer 1, through a method according to fig. 3 or while thermoforming them.

## Claims

1. Plate, panel or similar of thermoformable multilayer material, comprising one supporting layer (1) made of foamed plastic and coated on both faces by a crepe paper sheet (2) bonded to the supporting layer (1), characterized in that
a) on at least one of the crepe paper sheets (2) is bonded an outer coating layer (6),
b) each crepe paper sheet (2) has previously been provided on its inner coupling face contacting the supporting layer (1) with a thermoplastic adhesive film (3),
c) the inner coupling face of the outer coating layer (6) and/or the outer coupling face of the respective crepe paper sheet (2) has previously been provided with a thermoplastic adhesive film (3),
d) the crepe paper sheets (2), the interposed supporting layer (1) and the outer coating layer (6) have been heat sealed together.

2. Plate, panel or similar, according to claim 1, characterized in that the supporting layer (1) is made of foamed polypropylene.

3. Plate, panel or similar, according to claim 1 or 2, characterized in that the supporting layer (1) has a thickness from 1 to about 10 mm, particularly from 3 to 5 mm.

4. Plate, panel or similar, according to one of the preceding claims, characterized in that the supporting layer (1) has a density from 5 to 150 Kp/m3.

5. Plate, panel or similar, according to one or more of the preceding claims, characterized in that the thermoplastic adhesive film (3) is made of polypropylene.

6. Plate, panel or similar, according to one or more of the preceding claims, characterized in that the outer coating layer (6) is made of a material chosen from the following group: textiles, felts, not woven textiles, mat, of natural fibres, synthetic fibres, plastic films or sheets, sheets of natural or synthetic leather.

7. Method for fabrication of a plate, panel or similar, according to claim 1, characterized by the following steps.
e) the thermoplastic adhesive film (3) is spread at its plastic or substantially melted state on the inner coupling faces of each crepe paper sheet (2) and is allowed to dry,
f) the crepe paper sheets (2) are superimposed upon the two faces of the supporting layer (1),
g) previously and/or simultaneously and/or subsequently to the said superposition heat is applied to raise the temperature of the thermoplastic adhesive film (3) up to their melting temperature,
h) the crepe paper sheets (2) ad the supporting layer (1) are compressed together.

8. Method according to claim 7, characterized in that the crepe paper sheets (2) are bonded to the supporting layer (1) and/or the coating layer (6) is bonded to the respective paper sheet (2) during the thermoforming of the plate itself.

9. Method according to claim 7, characterized in that there is provided a previous step for bonding at least one coating layer (6) to one of the crepe paper sheets (2) before the thermoforming of the plate itself.

10. Method according to claim 7, characterized in that there is provided a step for hot spreading on one side of each crepe paper sheet (2) and/or of each coating layer (6) of an adhesive film (3) of a thermoplastic material, preferably of the same thermoplastic material of which the supporting layer (1) is made or a compatible thermoplastic material, and a following step of simultaneous or sequential coupling of the crepe paper sheets (2) and/or of the coating layers (6), provided with the adhesive film of thermoplastic material (3'), on the supporting layer (1), each film of thermoplastic material (3') being subjected to heating up to a temperature at which the said film (3') takes a pasty or substantially melted state, and the crepe paper sheets (2) and/or the coating layers (6) being compressed against the supporting layer (1).

11. Method according to claim 10, characterized in that the step for coupling the crepe paper sheets (2) an/or the coating layers (6) is executed in a continuous operation, the said crepe paper sheets (2) and/or the said coating layers (6) previously provided with the adhesive film of thermoplastic material (3') and then dried, being rolled in reels (5).

## Patentansprüche

1. Platte, Paneel oder ähnliche Artikel aus thermoformbarem, mehrschichtigen Material mit einer Trägerschicht (1), die aus Kunststoffschaum besteht und an beiden Seiten mit einem Krepp-Papierbogen (2) beschichtet und mit der Trägerschicht (1) verklebt ist, dadurch gekennzeichnet, daß
a) auf zumindest einem der Krepp-Papierbögen (2) eine äußere Deckschicht (6) aufgeklebt ist,
b) jeder Krepp-Papierbogen (2) vorher auf seiner inneren, mit der Trägerschicht (1) in Berührung kommenden Verbindungsfläche mit einem thermoplastischen Klebefilm (3) versehen ist,
c) auf der inneren Verbindungsfläche der äußeren Deckschicht (6) und/oder der äußeren Verbindungsfläche des entsprechenden Krepp-Papierbogens (2) vorher ein thermoplastischer Klebefilm (3) aufgetragen wurde,
d) die Krepp-Papierbögen (2), die dazwischenliegende Trägerschicht (1) und die äußere Deckschicht (6) miteinander heiß verschweißt sind.

2. Platte, Paneel oder ähnliche Artikel nach Anspruch 1, dadurch gekennzeichnet, daß die Trägerschicht (1) aus geschäumtem Polypropylen ausgebildet ist.

3. Platte, Paneel oder ähnliche Artikel nach Anspruch 1 oder 2, dadurch gekennzeichnet, daß die Trägerschicht (1) eine Dicke von 1 mm bis ungefähr 10 mm, insbesondere 3 mm bis 5 mm, aufweist.

4. Platte, Paneel oder ähnliche Artikel nach einem der vorhergehenden Ansprüche, dadurch gekennzeichnet, daß die Trägerschicht (1) eine Dichte von 5 Kp/m³ bis 150 Kp/m³ aufweist.

5. Platte, Paneel oder ähnliche Artikel gemäß einem oder mehreren der vorhergehenden Ansprüche, dadurch gekennzeichnet, daß der thermoplastische Klebefilm (3) aus Polypropylen hergestellt ist.

6. Platte, Paneel oder ähnliche Artikel nach einem oder mehreren der vorhergehenden Ansprüche, dadurch gekennzeichnet, daß die äußere Deckschicht (6) aus einem Material hergestellt ist, welches aus der folgenden Gruppe, wie Textilien, Filz, nicht gewobene Textilien, Geflecht aus natürlichen Fasern, Kunstfasern, Plastikfilmen oder Plastikbögen, Bögen aus natürlichem oder künstlichem Leder ausgewählt ist.

7. Verfahren zur Herstellung einer Platte, Paneele oder ähnlichen Artikeln gemäß Anspruch 1, gekennzeichnet durch folgende Schritte:
e) Der thermoplastische Klebefilm (3) wird in seinem plastischen oder im wesentlichen geschmolzenen Zustand auf die inneren Verbindungsflächen jedes Krepp-Papierbogens (2) aufgetragen und getrocknet,
f) die Krepp-Papierbögen (2) werden auf beiden Seiten der Trägerschicht (1) überlagert,
g) vorher und/oder gleichzeitig und/oder nachher zur Überlagerung wird Hitze angewandt, um die Temperatur des thermoplastischen Klebefilms (3) auf seine Schmelztemperatur zu erhöhen,
h) die Krepp-Papierbögen (2) und die Trägerschicht (1) werden zusammengepreßt.

8. Verfahren nach Anspruch 7, dadurch gekennzeichnet, daß die Krepp-Papierbögen (2) mit der Trägerschicht (1) verklebt und/oder die Deckschicht (6) mit dem entsprechenden Papierbogen (2) während dem Thermoformen der Platte verklebt wird.

9. Verfahren nach Anspruch 7, dadurch gekennzeichnet, daß ein vorheriger Schritt zum Kleben von zumindest einer Deckschicht (6) auf einem der Krepp-Papierbögen (2) vor dem Thermoverformen der Platte vorgesehen wird.

10. Verfahren nach Anspruch 7, dadurch gekennzeichnet, daß ein Schritt zum Heißauftragen auf einer Seite des Krepp-Papierbogens (2) und/oder jeder Deckschicht (6) eines Klebefilmes (3) aus thermoplastischem Material, insbesondere demselben thermoplastischen Material, aus dem die Trägerschicht (1) hergestellt ist oder einem verträglichen Material, vorgesehen ist und ein sich anschließender Schritt zum gleichzeitig oder nacheinander Verbinden der Krepp-Papierbogen (2) und/oder der Deckschichten (6), welche den Klebefilm aus thermoplastischem Material (3') aufweisen, mit der Trägerschicht (1) vorgesehen ist, wobei jeder Film aus thermoplastischem Material (3') einer Erwärmung auf eine Temperatur ausgesetzt ist, bei welcher der Film (3') einen pastösen oder im wesentlichen geschmolzenen Zustand einnimmt und die Krepp-Papierbögen (2) und/oder die Deckschichten (6) gegen die Trägerschicht (1) gepreßt werden.

11. Verfahren nach Anspruch 10, dadurch gekennzeichnet, daß der Schritt zum Verbinden der Krepp-Papierbögen (2) und/oder der Deckschicht (6) in einem kontinuierlichen Betrieb durchgeführt werden, wobei die Krepp-Papierbögen (2) und/oder die Deckschichten (6), die vorher mit einem Klebefilm aus thermoplastischem Material (3') versehen und dann getrocknet wurden, von Rollen abgewickelt werden.

## Revendications

1. Plaque, panneau ou analogue, d'une matière multicouche thermoformable comprenant une couche porteuse (1) faite de matière plastique en mousse et revêtue sur les deux faces d'une feuille de papier crêpe (2) fixée à la couche porteuse (1), caractérisé en ce que :
a) sur au moins une des feuilles de papier crêpe (2) est fixée une couche de revêtement extérieure (6),
b) chaque feuille de papier crêpe (2) a été préalablement munie d'un film adhésif thermoplastique (3) sur sa face d'accouplement intérieure qui entre en contact avec la couche porteuse (1),
c) la face d'accouplement intérieure de la couche de revêtement extérieure (6) et/ou la face d'accouplement extérieure de la feuille de papier crêpe (2) respective, a ou ont été préalablement munies d'un film adhésif thermoplastique (3),
d) les feuilles de papier crêpe (2), la couche porteuse (1) interposée et la couche de revêtement extérieure (6) ont été scellées ensemble à chaud.

2. Plaque, panneau ou analogue selon la revendication 1, caractérisé en ce que la couche porteuse (1) est faite de polypropylène en mousse.

3. Plaque, panneau ou analogue selon la revendication 1, caractérisé en ce que la couche porteuse (1) a une épaisseur de 1 à environ 10 mm, en particulier de 3 à 5 mm.

4. Plaque, panneau ou analogue selon l'une des revendications précédentes, caractérisé en ce que la couche porteuse (1) a une densité de 5 à 150 kp/m³.

5. Plaque, panneau ou analogue selon une des revendications précédentes, caractérisé en ce que le film adhésif thermoplastique (3) est fait de polypropylène.

6. Plaque, panneau ou analogue selon une des revendications précédentes, caractérisé en ce que la couche de revêtement extérieure (6) est faite d'une matière choisie dans le groupe suivant : textiles, feutres, textiles non tissés, nappes, de fibres naturelles, de fibres synthétiques, films ou feuilles plastiques, feuilles de cuir naturel ou synthétique.

7. Procédé pour la fabrication d'une plaque, panneau ou analogue selon la revendication 1, caractérisée par les phases suivantes :
e) on étale le film adhésif thermoplastique (3) dans son état plastique ou sensiblement fondu sur les faces d'accouplement intérieures de chaque feuille de papier crêpe (2) et on le laisse sécher,
f) on superpose les feuilles de papier crêpe sur les deux faces de la couche porteuse (1).
g) préalablement et/ou simultanément et/ou ultérieurement à la dite superposition, on apporte de la chaleur pour élever la température du film adhésif thermoplastique (3) jusqu'à sa température de fusion,
h) on comprime les feuilles de papier crêpe (2) et la couche porteuse (1) les unes contre les autres.

8. Procédé selon la revendication 7, caractérisé en ce qu'on fixe les feuilles de papier crêpe (2) à la couche porteuse (1) et/ou on fixe la couche de revêtement (6) à la feuille de papier crêpe (2) respective pendant le thermoformage de la plaque elle-même.

9. Procédé selon la revendication 7, caractérisé en ce qu'il comprend une phase préalable pour fixer au moins une couche de revêtement (6) à une des feuilles de papier crêpe (2) avant le thermoformage de la plaque.

10. Procédé selon la revendication 7, caractérisé en ce qu'il comprend une phase pour étaler à chaud sur une face de chaque feuille de papier crêpe (2) et/ou de chaque couche de revêtement (6) un film adhésif (3) d'une matière thermoplastique, de préférence de la même matière thermoplastique que celle dont la couche porteuse (1) est faite ou d'une matière thermoplastique compatible, et une phase suivante consistant à accoupler simultanément ou séquentiellement les feuilles de papier crêpe (2) et/ou les couches de revêtement (6), munies du film adhésif de matière thermoplastique (3'), à la couche porteuse (1), chaque film de matière thermoplastique (3') étant soumis à un chauffage qui le porte à une température à laquelle le dit film (3') prend un état pâteux ou sensiblement fondu, et les feuilles de papier crêpe (2) et/ou les couches de revêtement (6) étant comprimées contre la couche porteuse (1).

11. Procédé selon la revendication 10, caractérisé en ce que la phase servant à accoupler les feuilles de papier crêpe (2) et/ou les couches de revêtement (6) est exécutée en une opération continue, les dites feuilles de papier crêpe (2) et/ou les dites couches de revêtement (6) préalablement munies du film adhésif de matière thermoplastique (3') et ensuite séchées, étant enroulées en rouleaux (5).
